# EUROPEAN PATENT APPLICATION

(11) **EP 2 743 019 A1**
(43) Date of publication of application: **18.06.2014**
(21) Application number: 12197190.7
(22) Date of filing: 14.12.2012
(51) Int. Cl.: B23B 31/20, B23B 31/24, B23B 29/02, B23Q 11/00

(54) **Vibration damper for hole machining apparatus**

(71) Applicant: Sandvik Intellectual Property AB, 811 81 Sandviken (SE)
(72) Inventor: Lawes, James, Gloucester Gloucestershire GL2 2AU (GB); Lawes, Simon, Looe Cornwall PL13 1NY (GB); Evans, Tony, Wotton under Edge Gloucestershire GL12 7EF (GB)

(57) **Abstract**

A vibration damper for a drill tube of a hole machining apparatus. The damper comprises a closed loop bi-directional adjustment mechanism (34, 36) which operates from a single side of the damper. The closed loop mechanism ensures that the position of a clamping sleeve (24) has a one-to-one relationship with the adjustment mechanism, which enables controlled adjustment of the clamping force to be performed. Locating the adjustment mechanism at one side of the clamping sleeve facilitates retooling, e.g. replacing the clamping sleeve if a larger diameter drill tube is to be used.

## Description

### FIELD OF THE INVENTION

The invention relates to a vibration damper for a rotating drill tube or boring bar in hole machining apparatus, such as for deep hole drilling.

### BACKGROUND TO THE INVENTION

It is known to damp or suppress vibrations of a drill tube which occur during hole machining by bringing an independently rotatable mass into frictional engagement with the rotating drill tube. Conventionally, the rotatable mass is an annular member mounted around the drill tube. The frictional engagement between the drill tube and annular member is provided by a tapering (i.e. frustoconical) clamping sleeve. A cooperating tapering collet can be drawn on and off the clamping sleeve through the movement of adjustment members located at each end of the clamping sleeve along the axis of the drill tube.

The adjustment members of conventional vibration dampers can be adjusted manually or via hydraulic actuators.

In a known manual device, the adjustment member is threaded in a tapped bore of the damper housing (sometimes referred to as the damper carriage). Thus, a first adjustment member may be screwed into the damper housing to force the collet down the tapering clamping sleeve, which consequently applies a radial force on the drill tube. The damper may include one or more springs arranged to push the collet back up the taper upon release. These springs may be primed once the collet is in place by adjustment the second adjustment member at the opposite side of the clamping sleeve. Thus, upon screwing the first adjustment member out of the damper housing to release the clamping, the collet is forced up the taper by springs.

In practice, the desired clamping force is set through fine adjustment of the first adjustment member, which is fixed by closing the second adjustment member. A disadvantage of this arrangement is that if the springs fail to release the collet, e.g. if they seize up during use, damage can occur when the damper housing is moved.

The known hydraulically actuated device works in a similar way, in that the collet can be forced on to the clamping sleeve through appropriate adjustment of the first adjustment member via an hydraulic actuating force, and in that springs are provided to release the mechanism. The hydraulic system allows the damper to be actuated from outside the machine, but does not provide as much control as the manual device. Moreover, the presence of springs causes the same disadvantages as for the manual device.

US 4,305,264 discloses a vibration damping device in which a clamping sleeve is movable along the axis of a drill tube to provide a frictional connection to a flywheel. The clamping sleeve is sandwiched between two threaded adjustment members, which are movable simultaneously along the axis of the drill tube.

### SUMMARY OF THE INVENTION

At its most general, the present invention provides a bi-directional adjustment mechanism in which a drive member engages in a self-locking manner with an adjustment element of a vibration damper. The self-locking engagement may enable accurate positioning of the clamping sleeve in the vibration damper. The bi-directional nature of the adjustment mechanism may allow it to operate from only a single side of the damper. The self-locking engagement may further form part of a closed loop mechanism which ensures that the position of the clamping sleeve has a one-to-one relationship with the adjustment mechanism, i.e. the position of the drive member on the adjustment element, which enables fine adjustment of the clamping force to be performed.

According to the invention, there is provided a vibration damper for a drill tube of a hole machining apparatus, the vibration damper comprising: a damper carriage for mounting around the drill tube; an inertial mass rotatably mounted in the damper carriage; a clamping sleeve mounted in the damper carriage, the clamping sleeve having a bore for receiving the drill tube and being axially movable relative to the damper carriage to provide frictional engagement between the drill tube and inertial mass; an adjustment element connected to the clamping sleeve to move axially with the clamping sleeve and to rotate freely relative to the clamping sleeve; and a bi-directional drive mechanism arranged to drive the clamping sleeve forwards and backwards along its axis via the adjustment element, wherein the bi-directional drive mechanism includes a drive member in self-locking engagement with the adjustment element.

The axial position of the inertial mass in the damper carriage may be fixed. As explained above, the self-locking engagement between the adjustment element and the drive member may form a closed loop mechanism. If the axial position of the inertial mass is fixed, the effect of the closed loop mechanism is to permit precise control of the axial position of the clamping sleeve relative to the inertial mass. Since the relative axial position of the clamping sleeve and inertial mass sets the compression force on the drill tube, the compression force can thus be controlled accurately in an automated manner.

The clamping sleeve may be tapered such that axial movement thereof relative to the inertial mass causes radial compression or expansion of the clamping sleeve to press against (clamp on to) or release the drill tube. The clamping sleeve may comprise one or more axial slits to facilitate this radial compression and expansion.

The adjustment element may be connected to the clamping sleeve at only one axial end thereof. Thus, the adjustment element may operate to both push and pull the clamping sleeve along its axis. This arrangement may reduce the chances of the clamping sleeve becoming stuck in an engaged position. Locating the adjustment element at one side of the clamping sleeve facilitates re-tooling, e.g. replacing the clamping sleeve if a larger diameter drill tube is to be used.

The adjustment element may be connected to the clamping sleeve via one or more bearings, e.g. axial bearings, to permit the clamping sleeve to rotate with the inertial mass (and drill tube) relative to the adjustment element. The clamping sleeve may include a support ring at the axial end opposite the adjustment element. The support ring and clamping sleeve may be bolted to a bearing housing containing said one or more bearings by a plurality of bolts extending through the body of the clamping sleeve.

The connection between the adjustment element and the clamping sleeve may comprise an annular bearing housing having a first bearing seat for receiving a first axial bearing and a second bearing seat for receiving a second axial bearing, wherein the second bearing seat faces in the opposite direction to the first bearing seat, and the adjustment element comprises a radial flange disposed between the first and second bearing seats.

In one embodiment, the adjustment element may comprise a threaded sleeve extending in an axial direction. The threaded sleeve may be in threaded engagement with a drive transfer ring mounted on the damper carriage, whereby rotation of the adjustment element in either direction is transformed into simultaneous axial movement of the threaded sleeve into or out of the damper carriage.

The bi-directional drive mechanism may comprise a worm drive arranged to rotate the adjustment element. The worm drive may comprises a worm gear mounted to rotate with the threaded sleeve, and a worm driven by a suitable rotary drive arranged to apply a torque thereto. Other drive mechanisms may be used, e.g. a pulley to rotate a drive nut that is in threaded engagement with the adjustment element.

The bi-directional drive mechanism may be controllable via a computer numerical control (CNC) operating system, e.g. via the same CNC machine that operates the hole machining apparatus. The bi-directional drive mechanism may also be operable manually, e.g. as a back up or safety measure.

The CNC operating system may be programmable to set a desired clamping force in the vibration damper, e.g. via suitable calibration to a measurable parameter associated with the rotary drive. For example, the torque applied by the rotary drive may be detected by a suitable sensor. The closed loop nature of the bi-directional device allows the torque transmitted to be calibrated with the compression force between the clamping sleeve and drill tube.

One advantage of automated control of the compression force, is that it allows remote adjustment of the clamping sleeve. This may be useful where it is desirable to allow some slipping between the drill tube and clamping sleeve, e.g. when the vibration damper reaches the end of its track on the hole machining apparatus. Adjustment may be made on the fly, e.g. through the CNC operating system interface. Alternatively or additionally, a compression profile may be pre-programmed.

### BRIEF DESCRIPTION OF THE DRAWINGS

An embodiment of the invention is discussed in detail below with reference to the accompanying drawings, in which:
Fig. 1 is an exploded perspective view of a vibration damper that is an embodiment of the invention;
Fig. 2A is a side view of the vibration damper of Fig. 1 in an assembled state;
Fig. 2B is a rear view of the vibration damper of Fig. 1 in an assembled state;
Fig. 3 is a cross-sectional view through the line F-F in Fig. 2B; and
Fig. 4 is a schematic view of a hole machining apparatus in which the vibration damper of the invention may be used.

### DETAILED DESCRIPTION; FURTHER OPTIONS & PREFERENCES

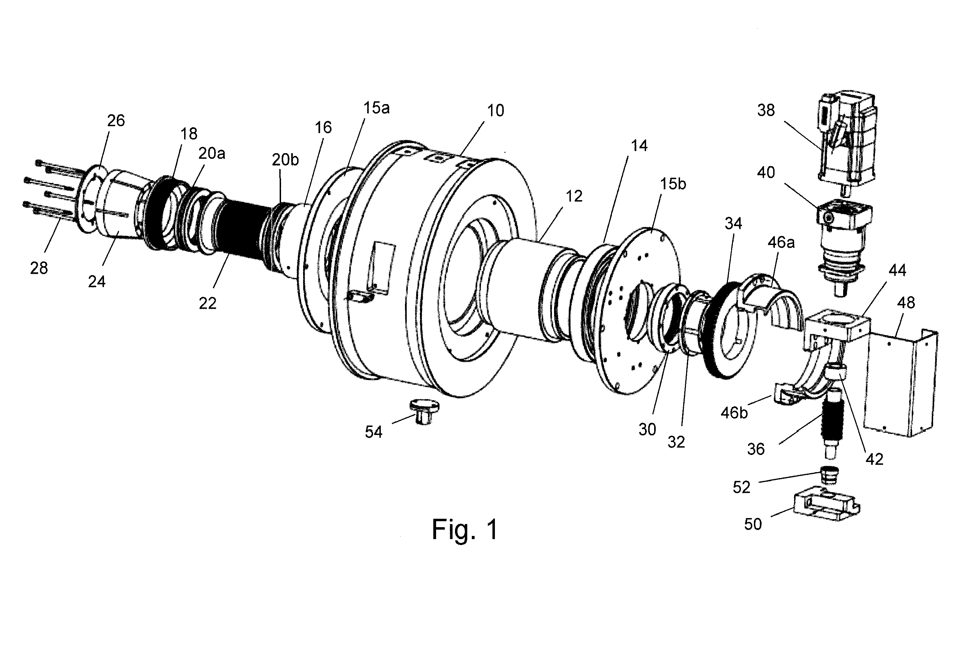

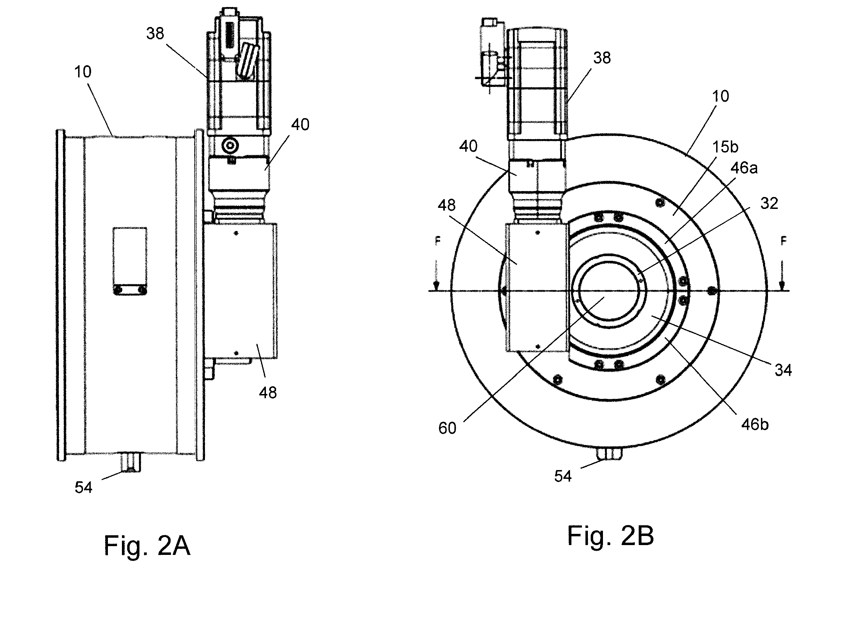

Fig. 1 shows the components of a vibration damper that is an embodiment of the invention. The vibration damper comprises an annular damper carriage 10 for mounting on a hole machining apparatus. The damper carriage 10 may be mounted in a steady-rest (not shown) e.g. using location connector 54. As is conventional, the steady-rest is slidably mounted on the machine bed of the hole machining apparatus. The damper carriage 10 and all the other annular components of the damper include a central aperture or bore 60 (see Fig. 2B) for receiving the drill tube (not shown) of the hole machining apparatus. References herein to an axial direction refer to a direction along an axis extending through the central aperture, i.e. in line with the drill tube.

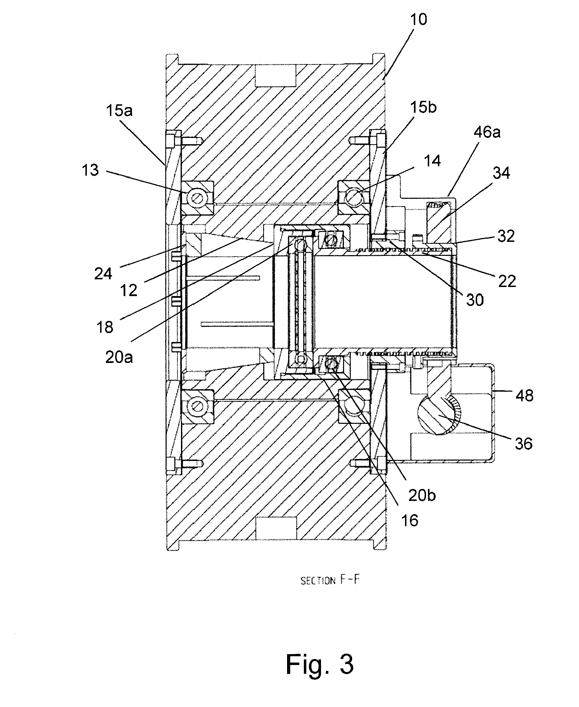

The damper carriage 10 houses components which are arranged to damp vibrations of the drill tube by connecting an additional rotatable mass to it. The damper carriage 10 thus contains an inertial mass 12, which is rotatably mounted therein on radial bearings 13, 14 at each axial end thereof (see Fig. 3). The position of the inertial mass 12 is fixed in an axial sense, i.e. it cannot move in the axial direction, by annular axial end plates 15a, 15b, which are mounted on each end of the bore through the damper carriage 10.

As shown most clearly in Fig. 3, the inertial mass 12 has a bore extending through it. The surface of the bore is partitioned into two sections: a conically tapering surface at one axial end, and a widened portion at the other axial end. The inertial mass 12 contains within the bore a clamping sleeve 24, an adjustment element 22 and a bearing housing containing two axial bearings 20a, 20b. The bearing housing is received in the widened portion of the bore. The clamping sleeve 24 is received in the conically tapering part of the bore. The adjustment element 22 is connect to the clamping sleeve 24 via the axial bearings 20a, 20b and extends in an axial direction through the bearing housing to protrude from one end of the damper carriage 10.

The bearing housing comprises a first housing portion 18, which is bolted to the clamping sleeve 24 by bolts 28, which extend axially through the clamping sleeve 24. The bolts 28 act on a support ring 26 which spreads the attachment force around the circumference of the clamping sleeve 24. The first housing portion 18 has a first bearing seat for receiving a first axial bearing 20a. The first axial bearing 20a is disposed between a flange on the axial end of the adjustment element 22 in the damper carriage and the first bearing seat, whereby axial movement of the adjustment element 22 in a first sense (which here is into the damper carriage, i.e. right to left in Fig. 3) is transferred to axial movement of the clamping sleeve 24 in the same sense by the flange pushes on the first axial bearing 20a.

The bearing housing comprises a second housing portion 16, which is in fixed threaded engagement with the first housing portion 18. The second housing portion 16 has a second bearing seat for receiving a second axial bearing 20b. The second bearing seat faces in the opposite direction to the first bearing seat. The second axial bearing 20b is disposed between the flange of the adjustment element 22 and the second bearing seat, on the opposite side of the flange from the first bearing seat. This arrangement means that axial movement of the adjustment element 22 in a second sense (which here is out of the damper carriage, i.e. left to right in Fig. 3) is transferred to axial movement of the clamping sleeve 24 in the same sense by the flange pushing on the second axial bearing 20b. The first axial bearing 20a thus acts to transfer a "pushing" force to the clamping sleeve 24, whereas the second axial bearing acts to transfer a "pulling" force to the clamping sleeve.

The clamping sleeve 24 itself may be of a conventional split fibre cone type. It has a frustoconical shape arranged to cooperate with the conically tapering inner surface of the inertial mass 12. Axial movement of the clamping sleeve 24 may thus draw the tapering surfaces together or apart. As the surfaces are drawn together, the clamping sleeve is compressed against the drill tube. The inertial mass 12 is thus brought into frictional engagement with the drill tube through the clamping sleeve 24.

The portion of the adjustment element 22 that extends through the bearing housing and protrudes from the damper carriage 10 comprises a tube with outer threads. These threads engage the inner threads of a guide ring 30 with is fixed, i.e. bolted, on the axial end plate 15b at the end of the damper carriage 10 where the adjustment element 22 protrudes. The threaded engagement between the guide ring 30 and adjustment element 22 means that any rotation of the adjustment element 22 relative to the damper carriage 10 causes a simultaneous axial displacement of the adjustment element 22 relative to the damper carriage 10 (and hence relative to the inertial mass 12). The threaded engagement is bi-directional, in that rotation in one sense causes axial movement into the damper carriage 10, whereas rotation in the opposite sense causes axial movement out of the damper carriage 10.

The adjustment element 22 is received in a drive transfer ring 32, which in this embodiment is attached (e.g. using radial screws or bolts) to the end of the adjustment element 22 that protrudes from the damper carriage. The drive transfer ring 32 is keyed connection with an annular worm gear 34 such that rotation of the worm gear 34 is transferred to rotation of the adjustment element 22. The worm gear 34 is encased in a worm gear cover 46a, 46b, which is mounted on the axial end plate 15b of the damper carriage 10.

The worm gear 34 is engaged with a worm 36 disposed at one side thereof, i.e. to the side of the drill tube in use. The worm 36 is rotatably mounted on a seat 50 via rotary bearing 52. The seat 50 is mount on the axial end plate 15b. The worm 36 is driven by a rotary drive 38 via a gearbox 40. The rotary drive 38 and gearbox are supported on a bracket 44 attached to the axial end plate 15b. The bracket 44 includes an aperture for receiving the worm 36. Rotation of the worm in the aperture is facilitated by a bushing 42. The worm 36 may be protected by a cover 48.

Although the present embodiment envisages the use of a rotary drive to provide the power to rotate the worm 36, the gearbox 40 may be arranged to permit manual operation, e.g. through the use of an appropriate crank tool.

Figs. 2A and 2B show side and rear views respectively of the vibration damper in an assembled state. It can be appreciated from Fig. 2A in particular that having the drive mechanism for the vibration damper on only one side of the damper carriage 10 improves access to the interior of the carriage, e.g. from the left hand side in Fig. 2A.

Fig. 3 shows a cross-sectional view of the vibration damper. In use, the rotary drive 38 can be operated to turn the worm 36 to cause rotation of the adjustment element 22 relative to the damper carriage 10. The threaded engagement between the adjustment element 22 and the drive transfer ring 32 transforms the rotation into an axial movement either into or out of the damper carriage 10. The axial movement of the adjustment element 22 is transferred to the clamping sleeve 24 through the axial bearings 20a, 20b. Axial movement of the clamping sleeve 24 relative to the conically tapering surface of the inertial mass 12 brings the clamping sleeve 24 into or out of frictional engagement with the drill tube.

In this embodiment, the features which provide the closed loop bi-directional drive mechanism of the invention are the combination of the worm drive (worm 36 and worm gear 34) and threaded engagement between the adjustment element 22 and the drive transfer ring 32. These features allow the axial position of the clamping sleeve to be known and set accurately. The axial position of the clamping sleeve relative to the inertial mass is related to the compression force applied to the drill tube. The torque required to drive the clamping sleeve to a particular axial position may thus be calibrated with the compression force achieved at that position. This arrangement can be used to enable the apparatus to set automatically, e.g. through the use of a suitably programmed CNC operating system.

As mentioned above, the closed loop bi-directional drive mechanism may be implemented in other ways, e.g. by driving the adjustment element via a pulley arrangement, or other arrangement that allows accurate control over the axial displacement of the adjustment element relative to the damper carriage 10. The closed loop mechanism ensures that the position of the clamping sleeve has one-to-one relationship with the adjustment mechanism. The position of the adjustment mechanism can be represented by any one of a number of parameters, e.g. the position of the adjustment element within the guide ring, or the angular position of the worm gear or number of rotations of the worm relative to some predetermined start position. The important thing is that unlike a conventional damper arrangement there is no other adjustable part that allows the clamping sleeve to be moved while the adjustment mechanism remains unchanged.

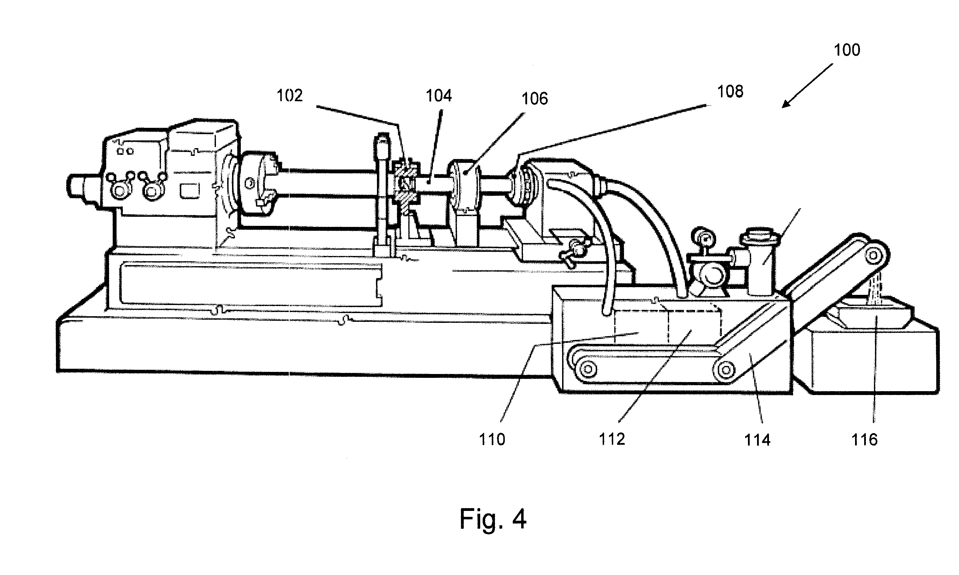

Fig. 4 shows a hole machining apparatus 100 in which the vibration damper of the invention may be used. The hole machining apparatus 100 comprises a drill tube 104 which is driven to rotate by a suitable connector 108 and supported by a suitable bush assembly 102. One or more vibration dampers 106 are typically mounted between the bush assembly 102 and the connector 108. As drilling proceeds, the drill tube may move axially into the workpiece. This movement causes the connector 108 to move along the apparatus 100. The vibration damper 106 may also move with the drill tube 104. However, if the vibration damper 106 reaches the bush assembly 102, it is no longer able to move with the drill tube. At this point it may be desirable to allow slipping between the drill tube and vibration damper. The present invention provide a mechanism for automatically (and remotely) altering the compression force exerted in the damper, which means slipping can be permitted in a controlled yet rapid manner.

The material ejected back through the drill tube 104 from the machining process may be passed through various filters 110 and coolers 112 before being transported on a conveyor 114 to a chip centrifuge 116.

## Claims

1. A vibration damper for a drill tube of a hole machining apparatus, the vibration damper comprising:
a damper carriage (10) for mounting around the drill tube;
an inertial mass (12) rotatably mounted in the damper carriage (10);
a clamping sleeve (24) mounted in the damper carriage (10), the clamping sleeve having a bore for receiving the drill tube and being axially movable relative to the damper carriage (10) to provide frictional engagement between the drill tube and inertial mass (12); and
an adjustment element (22) connected to the clamping sleeve (24) to move axially with the clamping sleeve and to rotate freely relative to the clamping sleeve,
**characterised by**:
a bi-directional drive mechanism (34, 36) arranged to drive the clamping sleeve (24) forwards and backwards along its axis via the adjustment element (22),
wherein the bi-directional drive mechanism includes a drive member (36) in self-locking engagement with the adjustment element (22).

2. A vibration damper according to claim 1, wherein the axial position of the inertial mass (12) in the damper carriage (10) is fixed, and the self-locking engagement between the adjustment element (22) and the drive member (36) forms a closed loop mechanism.

3. A vibration damper according to claim 1 or 2, wherein the clamping sleeve (24) is tapered such that axial movement thereof relative to the inertial mass (12) causes radial compression or expansion of the clamping sleeve (24).

4. A vibration damper according to any preceding claim, wherein the adjustment element (22) is connected to the clamping sleeve (24) at only one axial end thereof.

5. A vibration damper according to any preceding claim, wherein the adjustment element (22) is connected to the clamping sleeve via one or more bearings (20a, 20b) to permit the clamping sleeve (24) to rotate with the inertial mass (12) relative to the adjustment element (22).

6. A vibration damper according to claim 5 comprising an annular bearing housing having a first bearing seat (18) for receiving a first axial bearing (20a) and a second bearing seat (16) for receiving a second axial bearing (20b), wherein the second bearing seat (16) faces in the opposite direction to the first bearing seat (18), and the adjustment element (22) comprises a radial flange disposed between the first and second bearing seats.

7. A vibration damper according to any preceding claim, wherein the adjustment element (22) comprises a threaded sleeve extending in an axial direction, the threaded sleeve being in threaded engagement with a drive transfer ring (30) mounted on the damper carriage (10), whereby rotation of the adjustment element (22) in either direction is transformed into simultaneous axial movement of the threaded sleeve into or out of the damper carriage.

8. A vibration damper according to any preceding claim, wherein the bi-directional drive mechanism (34, 36) comprises a worm drive arranged to rotate the adjustment element (22).

9. A vibration damper according to any preceding claim, wherein the bi-directional drive mechanism is controllable via a computer numerical control (CNC) operating system.

10. A vibration damper according to claim 9, wherein the CNC operating system is programmable to set a desired clamping force in the vibration damper.
